(19) Europäisches Patentamt / European Patent Office / Office européen des brevets

(11) **EP 2 259 402 B1**

(12) **FASCICULE DE BREVET EUROPEEN**

(45) Date de publication et mention
de la délivrance du brevet:
**14.03.2018 Bulletin 2018/11**

(51) Int Cl.:
***H02H 7/045*** *(2006.01)*          ***H02H 3/34*** *(2006.01)*
***H02H 3/16*** *(2006.01)*

(21) Numéro de dépôt: **10354019.1**

(22) Date de dépôt: **07.05.2010**

(54) **Dispositif et procédé de protection de défaut terre**

Vorrichtung und Verfahren zum Schutz gegen einen Erdfehlerstrom

Device and method for the earth-fault protecttion

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **05.06.2009 FR 0902722**

(43) Date de publication de la demande:
**08.12.2010 Bulletin 2010/49**

(73) Titulaire: **Schneider Electric Industries SAS
92500 Rueil-Malmaison (FR)**

(72) Inventeur: **Drouere, Bernard
38050 Grenoble Cedex 09 (FR)**

(74) Mandataire: **Tripodi, Paul et al
Schneider Electric Industries SAS
Service Propriété Industrielle
World Trade Center / 38EE1
5 Place Robert Schuman
38050 Grenoble Cedex 09 (FR)**

(56) Documents cités:
**JP-A- 1 259 720      JP-A- 5 316 636
US-B1- 6 356 421**

EP 2 259 402 B1

**Description**

**DOMAINE TECHNIQUE**

L'invention concerne un dispositif de protection terre pour un appareil électrique triphasé comportant des entrées de mesure de courant, une unité de traitement et une sortie de détection de défaut, ladite unité de traitement comportant :

- des moyens d'analyse de signal fournissant pour chaque phase de courant un signal représentatif d'une la fréquence fondamentale de courant et un signal représentatif d'une seconde harmonique de courant, et
- des moyens de retenue de la seconde harmonique pour bloquer la détection de défaut terre lorsqu'un taux de seconde d'harmonique est atteint.

L'invention concerne aussi un procédé de protection terre comportant pour un appareil électrique triphasé comportant :

- la détermination d'un signal représentatif d'un courant résiduel,
- le traitement de la protection terre en utilisant le signal représentatif d'un courant résiduel,
- la détermination pour chaque phase d'une composante fondamentale et d'une composante de seconde harmonique,
- la retenue de la seconde harmonique pour bloquer la détection de défaut terre lorsqu'un taux de seconde d'harmonique est atteint.

**ETAT DE LA TECHNIQUE**

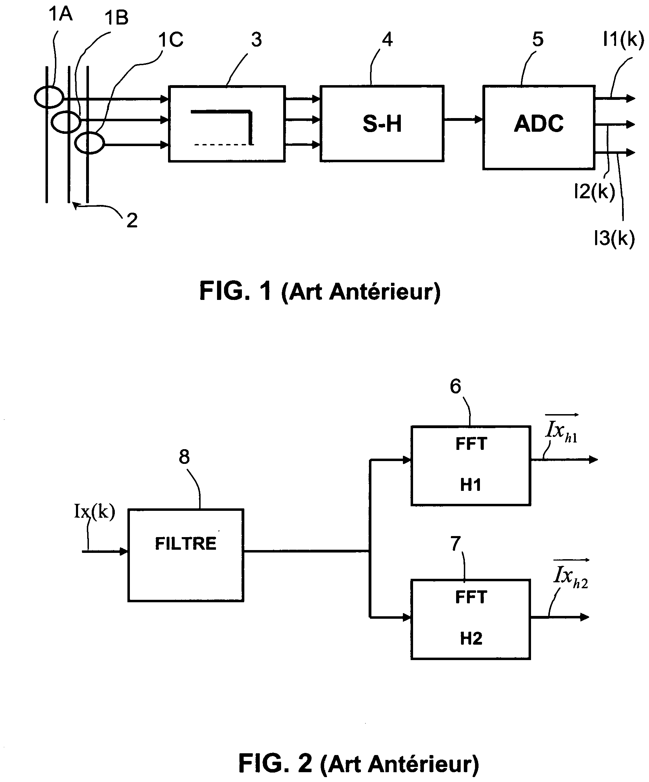

Dans les dispositifs de protection terre connus la valeur d'un courant résiduel Ir est déterminée en faisant la somme des signaux fournis par des capteurs de courants. Dans la norme "ANSI", une telle protection terre est codifiée 50N/51N. Sur la figure 1, des capteurs de courant 1A, 1B, 1C mesurent des courants circulant dans des conducteurs principaux 2. Les capteurs fournissent des signaux représentatifs des courants à un circuit de traitement comportant notamment dans la chaine de mesure un filtre 3 anti-repliement, un échantillonneur bloqueur 4, et un convertisseur analogique digital 5. Des signaux de courant numérisés I1(k), I2(k) et I3(k) sont fournis à un module de traitement comportant pour chaque phase un détecteur 6 de composante fondamentale et un détecteur 7 de seconde harmonique. Les détecteurs 6 et 7 sont de préférence précédés par un filtre 8. Ainsi, pour chaque signal numérisé I1(k), I2(k) et I3(k) représenté par Ix(k) sur la figure 2, le module de traitement fournit une valeur de la composante fondamentale Ixh1 et une valeur de la seconde harmonique Ixh2.

Cependant lorsque les capteurs de courants fonctionnent dans des parties non linéaires de leur courbe, de faux courants résiduels peuvent apparaitre lors de la reconstitution du signal de courant Ir. Ce cas se présente notamment lors d'un enclenchement pour alimenter un transformateur. La présence de faux courants résiduels dans le signal Ir reconstitué risque de faire déclencher intempestivement la protection terre. Pour éviter ce type de déclenchement, il est connu d'utiliser une retenue à seconde l'harmonique.

Une telle retenue sur la seconde harmonique risque d'inhiber aussi des protections de vrais défauts présentant des secondes harmoniques notamment ou lors de défauts intermittents ou lors de défauts préétablis au moment de l'enclenchement sur des transformateurs. Un exemple de protection avec la retenue de la seconde d'harmonique est divulgué dans JP 5 316 636.

**EXPOSE DE L'INVENTION**

L'invention a pour but un dispositif et un procédé de protection terre permettant un fonctionnement amélioré et de plus grandes possibilités de protections.

Un dispositif de protection terre selon l'invention comporte des premiers moyens de détection de courants monophasés comportant un taux individuel de seconde harmonique supérieur à un premier seuil haut pour activer la détection de défaut terre et/ou bloquer les actions desdits des moyens de retenue de la seconde harmonique..

Dans un mode de réalisation préférentiel, lesdits premiers moyens de détection de courants monophasés détectent un courant de défaut monophasé lorsque sur une seule phase un premier rapport entre un premier signal représentatif de la seconde harmonique et un premier signal représentatif de la composante fondamentale est supérieur à un seuil haut prédéterminé.

De préférence, lesdits premiers moyens de détection de courants monophasés détectent un courant de défaut monophasé lorsque sur les autres phases un rapport entre un second signal représentatif de la seconde harmonique et un second signal représentatif de la composante fondamentale et inférieur à un seuil bas prédéterminé.

Avantageusement, ledit premier signal représentatif de la seconde harmonique et/ou ledit second signal représentatif de la seconde harmonique sont des valeurs absolues de modules d'une seconde harmonique desdits signaux de courant correspondants, et/ou ledit premier signal représentatif de la composante fondamentale et/ou ledit second signal représentatif de la composante fondamentale sont des valeurs de modules absolues des composantes fondamentales desdits signaux de courant correspondants.

Avantageusement, ledit premier signal représentatif de la seconde harmonique et/ou ledit second signal représentatif de la seconde harmonique sont des valeurs absolues de modules élevées au carré d'une seconde harmonique desdits signaux de courant correspondants, et/ou ledit premier signal représentatif de la composante fondamentale et/ou ledit second signal représentatif de la composante fondamentale sont des valeurs de modules absolues élevées au carré des composantes fondamentales desdits signaux de courant correspondants.

De préférence, ledit seuil haut est de l'ordre de 20% en valeur normalisée ou de 0,04 en valeurs au carré et/ou ledit seuil bas est de l'ordre de 10% en valeur normalisée ou de 0,01 en valeurs au carré.

Dans un mode de réalisation particulier, le dispositif comporte des seconds moyens de détection de courants monophasés comportant un taux global de seconde harmonique supérieur à un seuil global pour activer l'action des moyens de retenue de la seconde harmonique, lesdits seconds moyens de détection déterminent le taux global de seconde harmonique sur la composante fondamentale en faisant le rapport entre la somme en valeurs absolue des modules élevées au carré de toutes les composantes de secondes harmoniques et la somme en valeurs absolue des modules élevées au carré de toutes les composantes fondamentales, ledit rapport étant comparé audit seuil global pour le blocage de la protection terre.

Un procédé de protection terre selon l'invention pour un appareil électrique triphasé comportant :

- la détermination d'un signal représentatif d'un courant résiduel,
- le traitement de la protection terre en utilisant le signal représentatif d'un courant résiduel,
- la détermination pour chaque phase d'une composante fondamentale et d'une composante de seconde harmonique, et
- la retenue de la seconde harmonique pour bloquer la détection de défaut terre lorsqu'un taux de seconde d'harmonique est atteint,

comporte une première détection de courants monophasés comportant un taux individuel de seconde harmonique supérieur à un premier seuil haut pour activer la détection de défaut terre et/ou bloquer les actions de la retenue de la seconde harmonique.

Dans un mode de réalisation préférentiel, ladite première détection de courants monophasés détecte un courant de défaut monophasé lorsque sur une seule phase un premier rapport entre un premier signal représentatif de la seconde harmonique et un premier signal représentatif de la composante fondamentale est supérieur à un seuil haut prédéterminé.

De préférence, ladite première détection de courants monophasés détecte un courant de défaut monophasé lorsqu'en plus sur les autres phases un rapport entre un second signal représentatif de la seconde harmonique et un second signal représentatif de la composante fondamentale et inférieur à un seuil bas prédéterminé.

Avantageusement, ledit premier signal représentatif de la seconde harmonique et/ou ledit second signal représentatif de la seconde harmonique sont des valeurs absolues de modules d'une seconde harmonique desdits signaux de courant correspondants, et/ou ledit premier signal représentatif de la composante fondamentale et/ou ledit second signal représentatif de la composante fondamentale sont des valeurs de modules absolues des composantes fondamentales desdits signaux de courant correspondants.

Avantageusement, ledit premier signal représentatif de la seconde harmonique et/ou ledit second signal représentatif de la seconde harmonique sont des valeurs absolues de modules élevées au carré d'une seconde harmonique desdits signaux de courant correspondants, et/ou ledit premier signal représentatif de la composante fondamentale et/ou ledit second signal représentatif de la composante fondamentale sont des valeurs de modules absolues élevées au carré des composantes fondamentales desdits signaux de courant correspondants.

Dans un mode de réalisation préférentiel, le procédé comporte une seconde détection de courants monophasés pour la détection de courants monophasés comportant un taux global de seconde harmonique supérieur à un seuil global pour activer la retenue de la seconde harmonique, ladite seconde détection déterminent le taux global de seconde harmonique sur la composante fondamentale en faisant le rapport entre la somme en valeurs absolue des modules élevées au carré de toutes les composantes de secondes harmoniques et la somme en valeurs absolue des modules élevées au carré de toutes les composantes fondamentales, ledit rapport étant comparé audit seuil global pour le blocage de la protection terre.

## BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- les figures 1 et 2 représentent des schémas block connu s d'un prétraitement de signaux de courants pour un dispositif de protection électrique ;
- les figures 3A et 3B illustrent un exemple de signaux à détecter par un dispositif et un procédé selon l'invention ;
- la figure 4 représente un schéma block d'un dispositif selon un premier mode de réalisation de l'invention ;
- la figure 5 représente un organigramme d'un procédé selon un mode de réalisation de l'invention ; et
- la figure 6 représente un schéma block d'un dispositif selon un second mode de réalisation de l'invention.

## DESCRIPTION DETAILLEE DE MODES DE REALISATION PREFERES

Dans un dispositif protection terre, un signal représentatif du courant résiduel Ir est calculé habituellement en faisant la somme des signaux représentatifs des courant des transformateurs. Dans certains cas, cette somme peut être limitée à la somme des vecteurs des composantes fondamentales des signaux de phases I1h1, I2h1, I2h1. Par exemple sous la forme :

$$Ir = \left| \overrightarrow{I1_{h1}} + \overrightarrow{I2_{h1}} + \overrightarrow{I3_{h1}} \right| \qquad (1).$$

Lorsque les capteurs ne fonctionnent pas dans la partie linéaire de leur courbe, de faux signaux de courant résiduels augmentent la valeur de Ir. Ce phénomène est détecté par la présence d'un taux élevé de seconde harmonique. Dans ce cas, il devient nécessaire d'inhiber la protection terre pour éviter des déclenchements intempestifs. Cette inhibition est nommée retenue sur la seconde harmonique. Un tel blocage ne permet pas de protéger des défauts qui ont naturellement des secondes harmoniques. Dans un dispositif selon l'invention, des moyens particuliers de détection permettent d'enlever la retenue sur la seconde l'harmonique et autoriser le déclenchement en protection terre pour certains cas identifiés, notamment les détections de défauts monophasés intermittents.

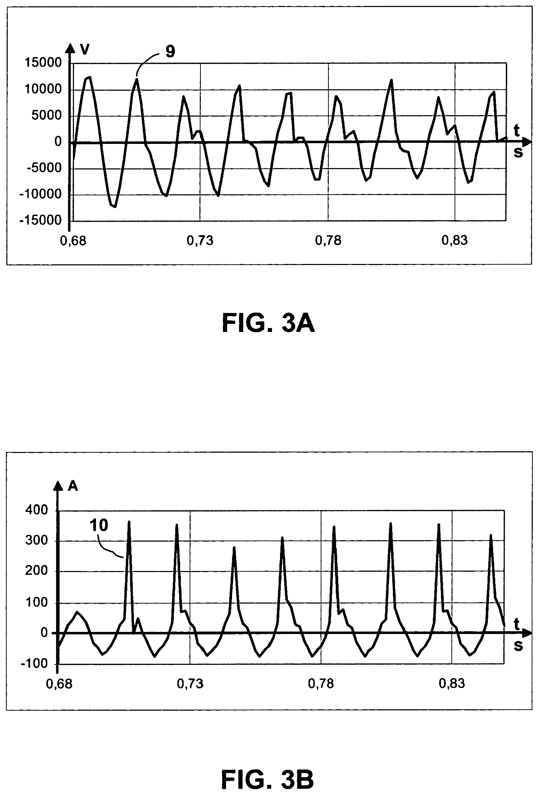

La figure 3B montre un signal de défaut Ir monophasé intermittent. Proche d'un maximum de tension d'une courbe de tension 9 représenté sur la figure 3A, un défaut 10 d'arc apparait. Ce type de défaut génère des secondes harmoniques sur un signal de courant correspondant.

La figue 4 montre un schéma block d'un dispositif de protection terre pour un appareil électrique triphasé selon un mode de réalisation de l'invention. Il comporte des entrées I de mesure de courant connectées à des capteurs de courant 1, une unité de traitement 12 et une sortie D de détection de défaut. L'unité de traitement comporte un module 13 pour déterminer un signal Ir représentatif d'un courant résiduel, des modules 14, 15 d'analyse de signal fournissant respectivement pour chaque phase de courant un signal H1I1, H1I2, et H1I3 représentatif d'une la fréquence fondamentale H1 de courant et un signal H2I1, H2I2 et H2I2 représentatif d'une seconde harmonique H2 de courant. Un module 16 de retenue de la seconde harmonique bloque la détection de défaut sur un module 20 d'inhibition de la protection terre lorsqu'un taux de seconde harmonique est présent.

Dans ce mode de réalisation de l'invention, le dispositif comporte un module 17 de détection de courants de défauts monophasés comportant un taux individuel de seconde harmonique supérieur à un premier seuil haut pour débloquer l'action du module 16 de retenue de la seconde harmonique. Le blocage est désactivé lorsqu'un taux TH2 individuel de seconde harmonique supérieur à un premier seuil haut SH prédéterminé.

Le module 17 de détection de défauts monophasés détecte un défaut monophasé lorsque sur une seule phase un premier rapport entre un premier signal respectivement H2I1, H2I2 ou H2I2 représentatif de la seconde harmonique et un premier signal respectivement H2I1, H2I2 ou H2I2 représentatif de la fréquence fondamentale est supérieur à un seuil haut SH prédéterminé. Ce seuil SH peut être de l'ordre de 20% ou de 0,04 lorsque des valeurs élevées au carrée sont utilisées.

Pour augmenter, la précision de la détection le module 17 de détection de défauts monophasés détecte aussi un courant défaut monophasé lorsque sur les autres phases un rapport entre un second signal respectivement H2I1, H2I2 ou H2I2 représentatif de la seconde harmonique et un second signal respectivement H2I1, H2I2 ou H2I2 représentatif de la fréquence fondamentale et inférieur à un seuil bas SB prédéterminé. Ce seuil SB peut être de l'ordre de 10% ou de 0,01 lorsque des valeurs élevées au carrée sont utilisées.

Le module 17 est particulièrement utilisé pour la détection de défauts d'arc électrique.

Avantageusement, ledit premier signal représentatif de la seconde harmonique et/ou ledit second signal représentatif de la seconde harmonique sont des valeurs absolues de modules d'une seconde harmonique desdits signaux de courant correspondants, et/ou ledit premier signal représentatif de la fréquence fondamentale et/ou ledit second signal représentatif de la fréquence fondamentale sont des valeurs de modules absolues des composantes fondamentales desdits signaux de courant correspondants.

Par exemple

$$T1 = \frac{\left|\overrightarrow{I1_{h2}}\right|}{\left|\overrightarrow{I1_{h1}}\right|} \quad ; \quad T2 = \frac{\left|\overrightarrow{I2_{h2}}\right|}{\left|\overrightarrow{I2_{h1}}\right|} \quad ; \quad T3 = \frac{\left|\overrightarrow{I3_{h2}}\right|}{\left|\overrightarrow{I3_{h1}}\right|} \quad (2)$$

Dans ce cas le seuil haut SH est de l'ordre de 20 % et le seuil bas de l'ordre de 10 %.

De préférence, ledit premier signal représentatif de la seconde harmonique et/ou ledit second signal représentatif de la seconde harmonique sont des valeurs absolues de modules élevées au carré d'une seconde harmonique desdits signaux de courant correspondants, et/ou ledit premier signal représentatif de la fréquence fondamentale et/ou ledit second signal représentatif de la fréquence fondamentale sont des valeurs de modules absolues élevées au carré des composantes fondamentales desdits signaux de courant correspondants.

Par exemple

$$T1 = \frac{\left|\overrightarrow{I1_{h2}}\right|^2}{\left|\overrightarrow{I1_{h1}}\right|^2} \quad ; \quad T2 = \frac{\left|\overrightarrow{I2_{h2}}\right|^2}{\left|\overrightarrow{I2_{h1}}\right|^2} \quad ; \quad T3 = \frac{\left|\overrightarrow{I3_{h2}}\right|^2}{\left|\overrightarrow{I3_{h1}}\right|^2} \quad (3)$$

Dans ce cas le seuil haut SH est de l'ordre de 0,04 et le seuil bas de l'ordre de 0,01.

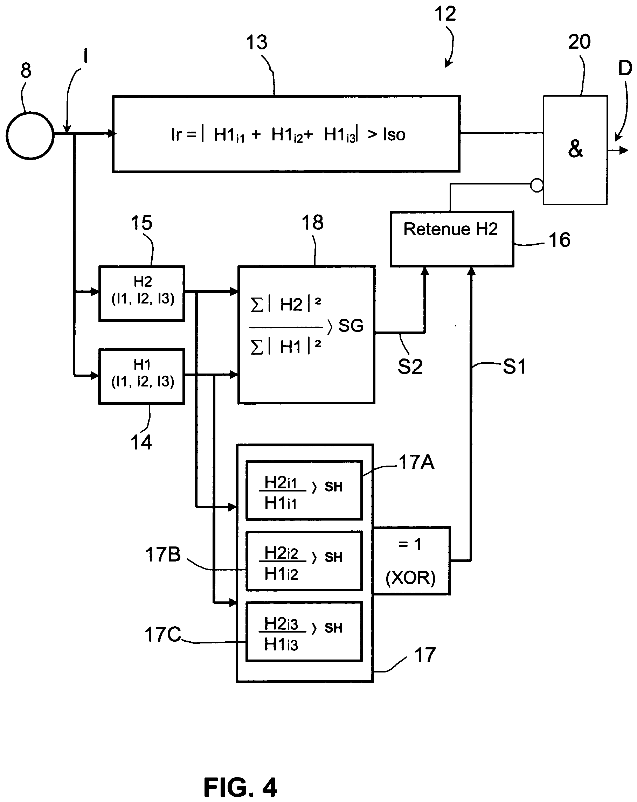

Le module 17 de la figure 4 comporte des détecteurs individuels 17A, 17B et 17C pour détecter un défaut monophasé lorsqu'un seul taux H2/H1 dépasse le seuil Haut SH les autres taux étant de préférence inférieurs au seuil bas. Ce fonctionnement peut être assimilé à un ou exclusif pour fournir un signal S1 de désactivation de la retenue de seconde harmonique.

Le dispositif de la figure 4 comporte aussi un module 18 de détection global de seconde harmonique monophasé. Ce dispositif 18 fournit un signal S2 d'activation de la retenue de la seconde harmonique lorsqu'un taux global TG dépasse un seuil SG. Ce taux peut être représenté par le rapport entre la somme des modules des secondes harmoniques de chaque phase sur la somme des composantes fondamentales de chaque phase. De préférence le seuil du taux TG est de l'ordre de 17% du taux de seconde d'harmonique en valeurs normalisées.

Le taux global TG de seconde harmonique sur la fréquence fondamentale peut être aussi déterminé par exemple en faisant le rapport entre la somme en valeurs absolue des modules élevées au carré de toutes les composantes de secondes harmoniques 2 et la somme en valeurs absolue des modules élevées au carré de toutes les composantes fondamentales, ledit rapport étant comparé audit seuil global pour le blocage de la protection terre.

Par exemple

$$TG = \frac{\left|\overrightarrow{I1_{h2}}\right|^2 + \left|\overrightarrow{I2_{h2}}\right|^2 + \left|\overrightarrow{I3_{h2}}\right|^2}{\left|\overrightarrow{I1_{h1}}\right|^2 + \left|\overrightarrow{I2_{h1}}\right|^2 + \left|\overrightarrow{I3_{h1}}\right|^2} \quad (4)$$

Dans ce cas le seuil global SG est de l'ordre de 0,03 sur des valeurs élevées au carré.

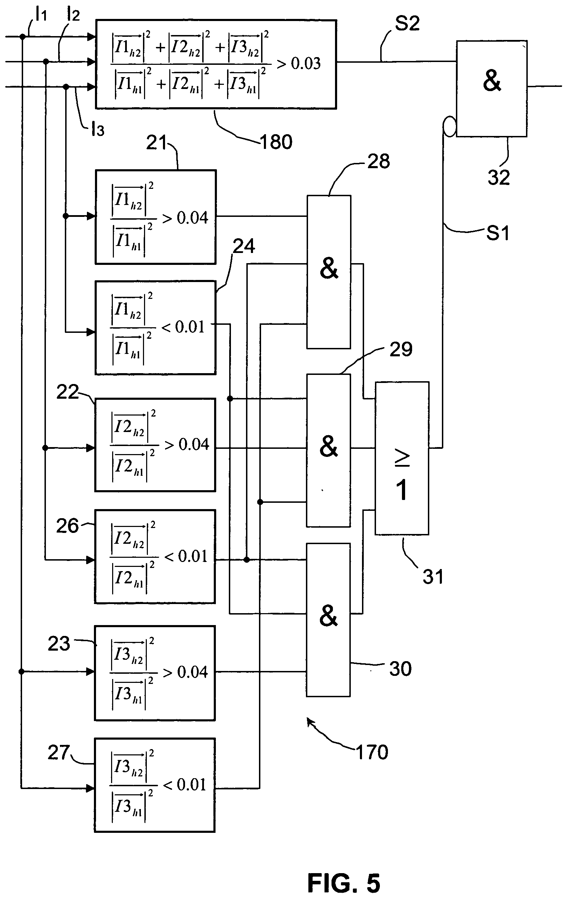

La figure 5 représente un schéma block d'un dispositif selon un second mode de réalisation de l'invention. Un module 18A reçoit les valeurs de courant I1, I2, I3 des trois capteurs 1A, 1B, 1C, il détermine le taux global de seconde harmonique par rapport à la composante fondamentale. Sur cette figure le module 18A détermine le taux global TG comme dans l'équation 4 en utilisant la somme des modules au élevés au carré.

Un module 17A est décomposé en plusieurs éléments de manière à illustrer par un exemple le fonctionnement d'un tel module. Il comporte : un module 21 faisant le rapport entre une composante de la seconde harmonique et une composante de la fondamentale d'un signal représentatif du courant I1 et comparant ce rapport à un seuil haut SH, des modules 22 et 23 faisant les mêmes opérations respectivement pour les courants I2 et I3, un module 24 faisant le rapport entre une composante de la seconde harmonique et une composante de la fondamentale d'un signal représentatif du courant I1 et comparant ce rapport à un seuil Bas SB, et des modules 25 et 26 faisant les mêmes opérations respectivement pour les courants I2 et I3. Une porte 28 opère le contrôle d'un défaut monophasé sur taux de seconde harmonique uniquement sur la première phase correspondant au courant I1. Ainsi, si le module 21 détecte un dépassement de seuil haut SH et les modules 26 et 27 détectent un taux de seconde harmonique inférieur au seuil bas dans SB le défaut monophasé est détecté. L'utilisation d'un seuil haut SH et d'un seuil bas SB permet avantageusement une discrimination efficace de la détection de défaut monophasé. Dans ce cas, les valeurs intermédiaires entre les seuils haut et bas sont rejetées pour ne pas activer le déblocage de la retenue de la seconde harmonique. Ainsi, les situations où un seul dépassement du seuil haut et deux taux inférieurs au seuil bas permettent de désactiver la retenue de la seconde harmonique. Des portes 29 et 30 fonctionnent de la même manière que la porte 28 pour des détections de défaut monophasé sur taux de seconde harmonique uniquement sur la seconde et uniquement sur la troisième respectivement. Une porte 31 regroupe les trois décisions des portes 28, 29 et 30, et une porte 32 regroupe les signaux S1 de désactivation de la retenue de la seconde harmonique sur défaut intermittent et S2 d'activation de la retenue de la seconde harmonique.

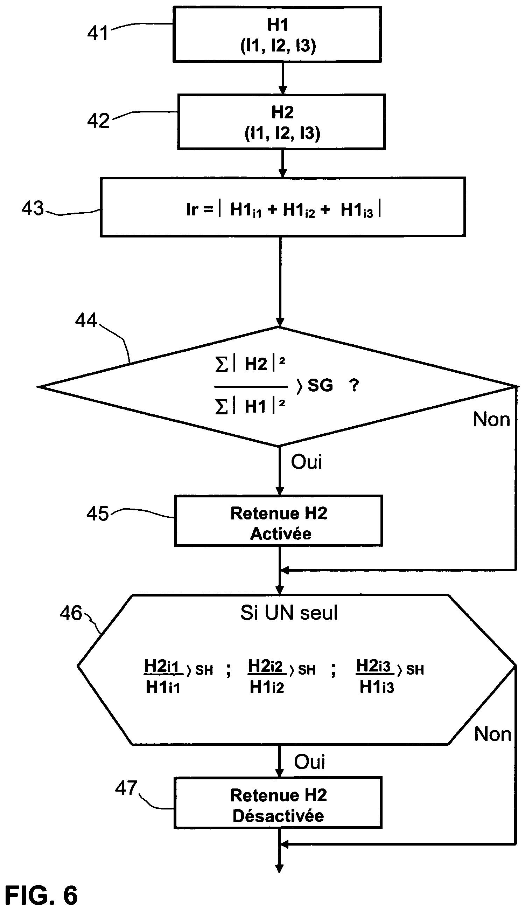

La figure 6 montre un organigramme d'un procédé de protection terre pour un appareil électrique triphasé selon un mode de réalisation de l'invention. A une étape 41, pour chaque phase une composante fondamentale H1 est déterminée. A une étape 42, pour chaque phase une composante de seconde harmonique H2 est déterminée. A une étape 43 un signal de courant résiduel Ir est déterminé pour être utilisé dans le traitement de la protection terre.

Une étape 44 teste si un taux global de seconde harmonique sur la fréquence fondamentale dépasse un seuil global prédéterminé. Si le seuil est dépassé, à une étape 45 la retenue de la seconde harmonique est activée pour bloquer la détection de défaut terre. Une étape 46 teste la présence d'un défaut monophasé comportant un taux de seconde harmonique supérieur à un seuil Haut sur une seule phase. Ainsi, la détection de courants de défaut monophasés comportant un taux individuel de seconde harmonique supérieur à un premier seuil haut désactive la retenue de la seconde harmonique à une étape 47.

Les mêmes modes de fonctionnements décrits pour le dispositif ci-dessus peuvent être appliqués au procédé.

Les dispositifs et procédés décrits ci-dessus sont applicables aux relais de protection triphasés. Ils sont utilisés avantageusement pour des réseaux en moyenne tension, mais aussi pour la basse tension ou la haute tension.

Les modules décrits pour le dispositif ci-dessus sont exemples descriptifs ils peuvent prendre des formes de circuits numériques, analogique et/ou programmés pour des microprocesseurs ou des microcontrôleurs.

## Revendications

**1.** Dispositif de protection terre pour un appareil électrique triphasé comportant des entrées (I) de mesure de courant, une unité de traitement (12) et une sortie (D) de détection de défaut,
ladite unité de traitement comportant :

- des moyens (6, 7) d'analyse de signal fournissant pour chaque phase de courant un signal (H1, Ixh1, I1h1 I2h1 I3h1) représentatif d'une la fréquence fondamentale de courant et un signal (H2, Ixh2) représentatif d'une seconde harmonique de courant, et
- des moyens (20) de retenue de la seconde harmonique pour bloquer la détection de défaut terre lorsqu'un taux de seconde d'harmonique est atteint,

**caractérisé en ce qu'**il comporte des premiers moyens (17, 17A, 17B, 17C, 170, 21-31) de détection de courants monophasés comportant un taux (TH2) individuel de seconde harmonique supérieur à un premier seuil haut (SH) pour activer la détection de défaut terre et/ou bloquer les actions desdits moyens de retenue de la seconde harmonique.

**2.** Dispositif selon la revendication 1 **caractérisé en ce que** lesdits premiers moyens (17, 17A, 17B, 17C, 170, 21-31) de détection de courants monophasés détectent un courant de défaut monophasé lorsque sur une seule phase un premier rapport (TH2, T1, T2, T3) entre un premier signal (H2, H2I1, H2I2, H2I3) représentatif de la seconde harmonique et un premier signal (H1, H1I1, H1I2, H1I3) représentatif de la composante fondamentale est supérieur à un seuil haut (SH) prédéterminé.

**3.** Dispositif selon la revendication 2 **caractérisé en ce que** lesdits premiers moyens de détection de courants monophasés détectent un courant de défaut monophasé lorsque sur les autres phases un rapport (TH2, T1, T2, T3) entre un second signal (H2, H2I1, H2I2, H2I3) représentatif de la seconde harmonique et un second signal (H1, H1I1, H1I2, H1I3) représentatif de la composante fondamentale et inférieur à un seuil bas (SB) prédéterminé.

**4.** Dispositif selon l'une des revendications 2 ou 3 **caractérisé en ce que** ledit premier signal (H2, H2I1, H2I2, H2I3) représentatif de la seconde harmonique et/ou ledit second (H2, H2I1, H2I2, H2I3) signal représentatif de la seconde harmonique sont des valeurs absolues de modules d'une seconde harmonique desdits signaux de courant correspondants, et/ou ledit premier signal (H1, H1I1, H1I2, H1I3) représentatif de la composante fondamentale et/ou ledit second signal (H1, H1I1, H1I2, H1I3) représentatif de la composante fondamentale sont des valeurs de modules absolues des composantes fondamentales desdits signaux de courant correspondants.

**5.** Dispositif selon l'une des revendications 2 ou 3 **caractérisé en ce que** ledit premier signal (H2, H2I1, H2I2, H2I3) représentatif de la seconde harmonique et/ou ledit second signal (H2, H2I1, H2I2, H2I3) représentatif de la seconde harmonique sont des valeurs absolues de modules élevées au carré d'une seconde harmonique desdits signaux de courant correspondants, et/ou ledit premier signal (H1, H1I1, H1I2, H1I3) représentatif de la composante fondamentale et/ou ledit second signal (H1, H1I1, H1I2, H1I3) représentatif de la composante fondamentale sont des valeurs de modules absolues élevées au carré des composantes fondamentales desdits signaux de courant correspondants.

**6.** Dispositif selon l'une quelconque des revendications 2 à 5 **caractérisé en ce que** ledit seuil haut est de l'ordre de 20% en valeur normalisée ou de 0,04 en valeurs au carré et/ou ledit seuil bas est de l'ordre de 10% en valeur normalisée ou de 0,01 en valeurs au carré.

**7.** Dispositif selon l'une quelconque des revendications 1 à 6 **caractérisé en ce qu'**il comporte des seconds moyens (18, 180) de détection de courants monophasés comportant un taux (TG) global de seconde harmonique supérieur à un seuil global (SG) pour activer l'action des moyens de retenue de la seconde harmonique, lesdits seconds moyens (18, 180) de détection déterminent le taux global de seconde harmonique (H2) sur la composante fondamentale (H2) en faisant le rapport (TG) entre la somme en valeurs absolue des modules élevées au carré de toutes les composantes (H2, H2I1, H2I2, H2I3) de secondes harmoniques et la somme en valeurs absolue des modules élevées au carré de toutes les composantes fondamentales (H1, H1I1, H1I2, H1I3), ledit rapport étant comparé audit seuil global (SG) pour le blocage de la protection terre.

**8.** Procédé de protection terre pour un appareil électrique triphasé comportant :

- la détermination (43) d'un signal représentatif d'un courant résiduel (Ir),
- le traitement de la protection terre en utilisant le signal représentatif d'un courant résiduel (Ir),
- la détermination (41, 42) pour chaque phase (I1, I2, I3) d'une composante fondamentale (H1, H1I1, H1I2, H1I3) et d'une composante de seconde harmonique (H2, H2I1, H2I2, H2I3),
- la retenue (44) de la seconde harmonique pour bloquer la détection de défaut terre lorsqu'un taux de seconde d'harmonique est atteint,

**caractérisé en ce qu'**il comporte une première détection (46) de courants monophasés comportant un taux (TH2) individuel de seconde harmonique supérieur à un premier seuil haut (SH) pour activer la détection de défaut terre et/ou bloquer les actions de la retenue de la seconde harmonique.

**9.** Procédé selon la revendication 8 **caractérisé en ce que** ladite première détection de courants monophasés détecte un courant de défaut monophasé lorsque sur une seule phase un premier rapport (TH2, T1, T2, T3) entre un premier signal (H2, H2I1, H2I2, H2I3) représentatif de la seconde harmonique et un premier signal (H1, H1I1, H1I2, H1I3) représentatif de la composante fondamentale est supérieur à un seuil haut (SH) prédéterminé.

**10.** Procédé selon la revendication 9 **caractérisé en ce que** ladite première détection de courants monophasés détecte un courant de défaut monophasé lorsque en plus sur les autres phases un rapport (TH2, T1, T2, T3) entre un second signal (H2, H2I1, H2I2, H2I3) représentatif de la seconde harmonique et un second signal (H1, H1I1, H1I2, H1I3) représentatif de la composante fondamentale et inférieur à un seuil bas (SB) prédéterminé.

**11.** Procédé selon l'une des revendications 9 ou 10 **caractérisé en ce que** ledit premier signal (H2, H2I1, H2I2, H2I3) représentatif de la seconde harmonique et/ou ledit second (H2, H2I1, H2I2, H2I3) signal représentatif de la seconde harmonique sont des valeurs absolues de modules d'une seconde harmonique desdits signaux de courant correspondants, et/ou ledit premier signal (H1, H1I1, H1I2, H1I3) représentatif de la composante fondamentale et/ou ledit second signal (H1, H1I1, H1I2, H1I3) représentatif de la composante fondamentale sont des valeurs de modules absolues des composantes fondamentales desdits signaux de courant correspondants.

**12.** Procédé selon l'une des revendications 9 ou 10 **caractérisé en ce que** ledit premier signal (H2, H2I1, H2I2, H2I3) représentatif de la seconde harmonique et/ou ledit second signal (H2, H2I1, H2I2, H2I3) représentatif de la seconde harmonique sont des valeurs absolues de modules élevées au carré d'une seconde harmonique desdits signaux de courant correspondants, et/ou ledit premier signal (H1, H1I1, H1I2, H1I3) représentatif de la composante fondamentale et/ou ledit second signal (H1, H1I1, H1I2, H1I3) représentatif de la composante fondamentale sont des valeurs de modules absolues élevées au carré des composantes fondamentales desdits signaux de courant correspondants.

**13.** Procédé selon l'une quelconques des revendications 8 à 12 **caractérisé en ce qu'**il comporte une seconde détection de courants monophasés (44, 18, 180) pour la détection de courants monophasés comportant un taux (TG) global de seconde harmonique supérieur à un seuil global (SG) pour activer la retenue de la seconde harmonique, ladite seconde détection (44, 18, 180) déterminent le taux global de seconde harmonique (H2) sur la composante fondamentale (H2) en faisant le rapport (TG) entre la somme en valeurs absolue des modules élevées au carré de toutes les composantes (H2, H2I1, H2I2, H2I3) de secondes harmoniques et la somme en valeurs absolue des modules élevées au carré de toutes les composantes fondamentales (H1, H1I1, H1I2, H1I3), ledit rapport étant comparé audit seuil global (SG) pour le blocage de la protection terre.

**Patentansprüche**

**1.** Erdschluss-Schutzvorrichtung für ein dreiphasiges elektrisches Gerät, das Strommesseingänge (I), eine Verarbeitungseinheit (12) und einen Fehlererfassungsausgang (D) aufweist,
wobei die Verarbeitungseinheit aufweist:

- Signalanalyseeinrichtungen (6, 7), die für jede Stromphase ein für die Stromgrundfrequenz repräsentatives Signal (H1, Ixh1, I1h1 I2h1 I3h1) und ein für eine zweite Stromharmonische repräsentatives Signal (H2, Ixh2) liefern, und
- Sperreinrichtungen (20) der zweiten Harmonischen, um die Erdschlusserfassung zu blockieren, wenn ein Gehalt zweiter Harmonischer erreicht ist,

**dadurch gekennzeichnet, dass** sie erste Einrichtungen (17, 17A, 17B, 17C, 170, 21-31) zur Erfassung einphasiger Ströme aufweist, die einen individuellen Gehalt (TH2) zweiter Harmonischer höher als eine erste obere Schwelle (SH) aufweisen, um die Erdschlusserfassung zu aktivieren und/oder die Aktionen der Sperreinrichtungen der zweiten Harmonische zu blockieren.

**2.** Vorrichtung nach Anspruch 1, **dadurch gekennzeichnet, dass** die ersten Einrichtungen (17, 17A, 17B, 17C, 170, 21-31) zur Erfassung einphasiger Ströme einen einphasigen Fehlerstrom erfassen, wenn in einer einzigen Phase ein erstes Verhältnis (TH2, T1, T2, T3) zwischen einem für die zweite Harmonische repräsentativen ersten Signal (H2, H2I1, H2I2, H2I3) und einem für die Grundkomponente repräsentativen ersten Signal (H1, H1I1, H1I2, H1I3) höher ist als eine vorbestimmte obere Schwelle (SH).

**3.** Vorrichtung nach Anspruch 2, **dadurch gekennzeichnet, dass** die ersten Erfassungseinrichtungen einphasiger Ströme einen einphasigen Fehlerstrom erfassen, wenn in den anderen Phasen ein Verhältnis (TH2, T1, T2, T3) zwischen einem für die zweite Harmonische repräsentativen zweiten Signal (H2, H2I1, H2I2, H2I3) und einem für die Grundkomponente repräsentativen zweiten Signal (H1, H111, H1I2, H1I3) niedriger und als eine vorbestimmte untere Schwelle (SB).

**4.** Vorrichtung nach einem der Ansprüche 2 oder 3, **dadurch gekennzeichnet, dass** das für die zweite Harmonische repräsentative erste Signal (H2, H2I1, H2I2, H2I3) und/oder das für die zweite Harmonische repräsentative zweite Signal (H2, H2I1, H2I2, H2I3) Absolutwerte von Modulen einer zweiten Harmonischen der entsprechenden Stromsignale sind, und/oder das für die Grundkomponente repräsentative erste Signal (H1, H1I1, H1I2, H1I3) und/oder das für die Grundkomponente repräsentative zweite Signal (H1, H1I1, H1I2, H1I3) Absolutwerte von Modulen der Grundkomponenten der entsprechenden Stromsignale sind.

**5.** Vorrichtung nach einem der Ansprüche 2 oder 3, **dadurch gekennzeichnet, dass** das für die zweite Harmonische repräsentative erste Signal (H2, H2I1, H2I2, H2I3) und/oder das für die zweite Harmonische repräsentative zweite Signal (H2, H2I1, H2I2, H2I3) quadrierte Absolutwerte von Modulen einer zweiten Harmonischen der entsprechenden Stromsignale sind, und/oder das für die Grundkomponente repräsentative erste Signal (H1, H1I1, H1I2, H1I3) und/oder das für die Grundkomponente repräsentative zweite Signal (H1, H1I1, H1I2, H1I3) quadrierte Absolutwerte von Modulen der Grundkomponenten der entsprechenden Stromsignale sind.

6. Vorrichtung nach einem der Ansprüche 2 bis 5, **dadurch gekennzeichnet, dass** die obere Schwelle in der Größenordnung von 20% in genormtem Wert oder von 0,04 in quadrierten Werten ist, und/oder die untere Schwelle in der Größenordnung von 10% in genormtem Wert oder von 0,01 in quadrierten Werten ist.

7. Vorrichtung nach einem der Ansprüche 1 bis 6, **dadurch gekennzeichnet, dass** sie zweite Einrichtungen (18, 180) zur Erfassung einphasiger Ströme aufweist, die einen globalen Gehalt (TG) zweiter Harmonischer höher als eine globale Schwelle (SG) aufweisen, um die Aktion der Sperreinrichtungen der zweiten Harmonischen zu aktivieren, wobei die zweiten Erfassungseinrichtungen (18, 180) den globalen Gehalt zweiter Harmonischer (H2) über der Grundkomponente (H2) bestimmen, indem das Verhältnis (TG) zwischen der Summe in quadrierten Absolutwerten der Module aller Komponenten (H2, H2I1, H2I2, H2I3) zweiter Harmonischer und der Summe in quadrierten Absolutwerten der Module aller Grundkomponenten (H1, H1I1, H1I2, H1I3) gebildet wird, wobei das Verhältnis mit der globalen Schwelle (SG) zum Blockieren des Erdschlusses verglichen wird.

8. Erdschluss-Schutzverfahren für ein dreiphasiges elektrisches Gerät, das aufweist:

   - die Bestimmung (43) eines für einen Reststrom (Ir) repräsentativen Signals,
   - die Verarbeitung des Erdschlussschutzes unter Verwendung des für einen Reststrom (Ir) repräsentativen Signals,
   - die Bestimmung (41, 42) für jede Phase (I1, I2, I3) einer Grundkomponente (H1, H1I1, H1I2, H1I3) und einer Komponente zweiter Harmonischer (H2, H2I1, H2I2, H2I3),
   - die Sperre (44) der zweiten Harmonischen, um die Erdschlusserfassung zu blockieren, wenn ein Gehalt zweiter Harmonischer erreicht wird,

   **dadurch gekennzeichnet, dass** es eine erste Erfassung (46) einphasiger Ströme aufweist, die einen individuellen Gehalt (TH2) zweiter Harmonischer höher als eine erste obere Schwelle (SH) aufweisen, um die Erdschlusserfassung zu aktivieren und/oder die Aktionen der Sperre der zweiten Harmonischen zu blockieren.

9. Verfahren nach Anspruch 8, **dadurch gekennzeichnet, dass** die erste Erfassung einphasiger Ströme einen einphasigen Fehlerstrom erfasst, wenn in einer einzigen Phase ein erstes Verhältnis (TH2, T1, T2, T3) zwischen einem für die zweite Harmonische repräsentativen ersten Signal (H2, H2I1, H2I2, H2I3) und einem für die Grundkomponente repräsentativen ersten Signal (H1, H1I1, H1I2, H1I3) höher ist als eine vorbestimmte obere Schwelle (SH).

10. Verfahren nach Anspruch 9, **dadurch gekennzeichnet, dass** die erste Erfassung einphasiger Ströme einen einphasigen Fehlerstrom erfasst, wenn zusätzlich in den anderen Phasen ein Verhältnis (TH2, T1, T2, T3) zwischen einem für die zweite Harmonische repräsentativen zweiten Signal (H2, H2I1, H2I2, H2I3) und einem für die Grundkomponente repräsentativen zweiten Signal (H1, H1I1, H1I2, H1I3) niedriger ist als eine vorbestimmte untere Schwelle (SB).

11. Verfahren nach einem der Ansprüche 9 oder 10, **dadurch gekennzeichnet, dass** das für die zweite Harmonische repräsentative erste Signal (H2, H2I1, H2I2, H2I3) und/oder das für die zweite Harmonische repräsentative zweite Signal (H2, H2I1, H2I2, H2I3) Absolutwerte von Modulen einer zweiten Harmonischen der entsprechenden Stromsignale sind, und/oder das für die Grundkomponente repräsentative erste Signal (H1, H1I1, H1I2, H1I3) und/oder das das für die Grundkomponente repräsentative zweite Signal (H1, H1I1, H1I2, H1I3) Absolutwerte von Modulen der Grundkomponenten der entsprechenden Stromsignale sind.

12. Verfahren nach einem der Ansprüche 9 oder 10, **dadurch gekennzeichnet, dass** das für die zweite Harmonische repräsentative erste Signal (H2, H2I1, H2I2, H2I3) und/oder das für die zweite Harmonische repräsentative zweite Signal (H2, H21, H2I2, H2I3) quadrierte Absolutwerte von Modulen einer zweiten Harmonischen der entsprechenden Stromsignale sind, und/oder das für die Grundkomponente repräsentative erste Signal (H1, H1I1, H1I2, H1I3) und/oder das für die Grundkomponente repräsentative zweite Signal (H1, H1I1, H1I2, H1I3) quadrierte Absolutwerte von Modulen der Grundkomponenten der entsprechenden Stromsignale sind.

13. Verfahren nach einem der Ansprüche 8 bis 12, **dadurch gekennzeichnet, dass** es eine zweite Erfassung von einphasigen Strömen (44, 18, 180) zur Erfassung einphasiger Ströme aufweist, die einen globalen Gehalt (TG) zweiter Harmonischer höher als eine globale Schwelle (SG) aufweisen, um die Sperre der zweiten Harmonischen zu aktivieren, wobei die zweite Erfassung (44, 18, 180) den globalen Gehalt zweiter Harmonischer (H2) über der Grundkomponente (H2) bestimmen, indem das Verhältnis (TG) zwischen der Summe in quadrierten Absolutwerten der Module aller Komponenten (H2, H2I1, H2I2, H2I3) zweiter Harmonischer und der Summe in quadrierten Absolutwerten der Module aller Grundkomponenten (H1, H111, H112, H113) gebildet wird, wobei das Verhältnis mit der globalen Schwelle (SG) zum Blockieren des Erdschlussschutzes verglichen wird.

**Claims**

1. Earth protection device for a three-phase electrical apparatus comprising current measurement inputs (I), a processing unit (12) and a fault detection output (D), said processing unit comprising:

   - signal analysis means (6, 7) supplying, for each current phase, a signal (H1, Ixh1, I1h1 I2h1 I3h1), representative of a the fundamental current frequency and a signal (H2, Ixh2) representative of a second current harmonic, and
   - means (20) for retaining the second harmonic to block the earth fault detection when a second harmonic rate is reached,

   **characterized in that** it comprises first means (17, 17A, 17B, 17C, 170, 21-31) for detecting single-phase currents comprising an individual second harmonic rate (TH2) above a first high threshold (SH) to activate the earth fault detection and/or block the actions of said second harmonic retention means.

2. Device according to Claim 1, **characterized in that** said first single-phase current detection means (17, 17A, 17B, 17C, 170, 21-31) detect a single-phase fault current when, on a single phase, a first ratio (TH2, T1, T2, T3) between a first signal (H2, H2I1, H2I2, H2I3) representative of the second harmonic and a first signal (H1, H1I1, H1I2, H1I3) representative of the fundamental component is above a predetermined high threshold (SH).

3. Device according to Claim 2, **characterized in that** said first single-phase current detection means detect a single-phase fault current when, on the other phases, a ratio (TH2, T1, T2, T3) between a second signal (H2, H2I1, H2I2, H2I3) representative of the second harmonic and a second signal (H1, H1I1, H1I2, H1I3) representative of the fundamental component and below a predetermined low threshold (SB).

4. Device according to one of Claims 2 or 3, **characterized in that** said first signal (H2, H2I1, H2I2, H2I3) representative of the second harmonic and/or said second signal (H2, H2I1, H2I2, H2I3) representative of the second harmonic are absolute values of moduli of a second harmonic of said corresponding current signals, and/or said first signal (H1, H1I1, H1I2, H1I3) representative of the fundamental component and/or said second signal (H1, H1I1, H1I2, H1I3) representative of the fundamental component are absolute values of moduli of the fundamental components of said corresponding current signals.

5. Device according to one of Claims 2 or 3, **characterized in that** said first signal (H2, H2I1, H2I2, H2I3) representative of the second harmonic and/or said second signal (H2, H2I1, H2I2, H2I3) representative of the second harmonic are squared absolute values of moduli of a second harmonic of said corresponding current signals, and/or said first signal (H1, H1I1, H1I2, H1I3) representative of the fundamental component and/or said second signal (H1, H1I1, H1I2, H1I3) representative of the fundamental component are squared absolute values of moduli of the fundamental components of said corresponding current signals.

6. Device according to any one of Claims 2 to 5, **characterized in that** said high threshold is of the order of 20% in normalized value or 0.04 in squared values and/or said low threshold is of the order of 10% in normalized value or 0.01 in squared values.

7. Device according to any one of Claims 1 to 6, **characterized in that** it comprises second means (18, 180) for detecting single-phase currents comprising a global second harmonic rate (TG) above a global threshold (SG) to activate the action of the second harmonic retention means, said second detection means (18, 180) determine the global rate of second harmonic (H2) on the fundamental component (H2) by calculating the ratio (TG) between the sum in squared absolute values of the moduli of all the second harmonic components (H2, H2I1, H2I2, H2I3), and the sum in squared absolute values of the moduli of all the fundamental components (H1, H1I1, H1I2, H1I3), said ratio being compared to said global threshold (SG) for the blocking of the earth protection.

8. Earth protection method for a three-phase electrical apparatus comprising:

- the determination (43) of a signal representative of a residual current (Ir),
- the processing of the earth protection by using the signal representative of a residual current (Ir),
- the determination (41, 42), for each phase (I1, I2, I3), of a fundamental component (H1, H1I1, H1I2, H1I3) and of a second harmonic component (H2, H2I1, H2I2, H2I3),
- the retention (44) of the second harmonic to block the earth fault detection when a second harmonic rate is reached,

**characterized in that** it comprises a first detection (46) of single-phase currents comprising an individual second harmonic rate (TH2) above a first high threshold (SH) to activate the earth fault detection and/or block the second harmonic retention actions.

9. Method according to Claim 8, **characterized in that** said first single-phase current detection detects a single-phase fault current when, on a single phase, a first ratio (TH2, T1, T2, T3) between a first signal (H2, H2I1, H2I2, H2I3) representative of the second harmonic and a first signal (H1, H1I1, H1I2, H1I3) representative of the fundamental component is above a predetermined high threshold (SH).

10. Method according to Claim 9, **characterized in that** said first single-phase current detection detects a single-phase fault current when, in addition on the other phases, a ratio (TH2, T1, T2, T3) between a second signal (H2, H2I1, H2I2, H2I3) representative of the second harmonic and a second signal (H1, H1I1, H1I2, H1I3) representative of the fundamental component and below a predetermined low threshold (SB).

11. Method according to one of Claims 9 or 10, **characterized in that** said first signal (H2, H2I1, H2I2, H2I3) representative of the second harmonic and/or said second signal (H2, H2I1, H2I2, H2I3) representative of the second harmonic are absolute values of moduli of a second harmonic of said corresponding current signals, and/or said first signal (H1, H1I1, H1I2, H1I3) representative of the fundamental component and/or said second signal (H1, H1I1, H1I2, H1I3) representative of the fundamental component are absolute values of moduli of the fundamental components of said corresponding current signals.

12. Method according to one of Claims 9 or 10, **characterized in that** said first signal (H2, H2I1, H2I2, H2I3) representative of the second harmonic and/or said second signal (H2, H2I1, H2I2, H2I3) representative of the second harmonic are squared absolute values of moduli of a second harmonic of said corresponding current signals, and/or said first signal (H1, H1I1, H1I2, H1I3) representative of the fundamental component and/or said second signal (H1, H1I1, H1I2, H1I3) representative of the fundamental component are squared absolute values of moduli of the fundamental components of said corresponding current signals.

13. Method according to any one of Claims 8 to 12, **characterized in that** it comprises a second single-phase current detection (44, 18, 180) for the detection of single-phase currents comprising a global second harmonic rate (TG) above a global threshold (SG) to activate the retention of the second harmonic, said second detection (44, 18, 180) determine the global rate of second harmonic (H2) on the fundamental component (H2) by calculating the ratio (TG) between the sum in squared absolute values of the moduli of all the second harmonic components (H2, H2I1, H2I2, H2I3) and the sum in squared absolute values of the moduli of all the fundamental components (H1, H1I1, H1I2, H1I3), said ratio being compared to said global threshold (SG) for the blocking of the earth protection.

## FIG. 1 (Art Antérieur)

## FIG. 2 (Art Antérieur)

**FIG. 3A**

**FIG. 3B**

**FIG. 4**

**FIG. 5**

41 — H1
(I1, I2, I3)

42 — H2
(I1, I2, I3)

43 — $Ir = \left| H1_{i1} + H1_{i2} + H1_{i3} \right|$

44 — $\dfrac{\sum \left| H2 \right|^2}{\sum \left| H1 \right|^2} \rangle SG$ ?   Non

Oui

45 — Retenue H2
Activée

46 — Si UN seul

$\dfrac{H2i1}{H1i1} \rangle SH$ ;   $\dfrac{H2i2}{H1i2} \rangle SH$ ;   $\dfrac{H2i3}{H1i3} \rangle SH$   Non

Oui

47 — Retenue H2
Désactivée

**FIG. 6**

**EP 2 259 402 B1**

## RÉFÉRENCES CITÉES DANS LA DESCRIPTION

### Documents brevets cités dans la description

- JP 5316636 A